# EUROPEAN PATENT SPECIFICATION

(11) **EP 4 528 354 B1**
(45) Date of publication and mention of the grant of the patent: **30.09.2026**
(21) Application number: 22955966.1
(22) Date of filing: 23.08.2022
(51) Int. Cl.: G02B 23/12, G02B 23/00, G02B 13/16

(54) **LOW-LIGHT NIGHT VISION DEVICE**
NACHTSICHTVORRICHTUNG FÜR SCHWACHE BELEUCHTUNG
DISPOSITIF DE VISION NOCTURNE À FAIBLE LUMIÈRE

(43) Date of publication of application: 26.03.2025
(73) Proprietor: Raytron Technology Co., Ltd., Yantai, Shandong 264006 (CN)
(72) Inventor: HAN, Yue, Yantai Shandong 264006 (CN); YAO, Yao, Yantai Shandong 264006 (CN)
(74) Representative: Reiser & Partner Patentanwälte mbB
(86) International application number: PCT/CN2022/114076
(87) International publication number: WO 2024/040417

(56) References cited:
- CN-A- 111 751 976
- CN-A- 113 473 089
- CN-A- 113 473 089
- CN-U- 210 005 790
- CN-U- 210 005 790
- CN-U- 214 409 443
- US-A- 3 737 667
- US-A- 5 867 313
- US-A- 6 088 165
- US-A1- 2008 290 260

## Description

### TECHNICAL FIELD

This application relates to the field of night vision devices and, in particular, to a low-light night vision device.

### BACKGROUND

Low-light night vision systems take image intensifiers as a core component which amplifies weak moonlight, starlight, atmospheric glow, etc. reflected from a target scene, so as to obtain a bright scene image that can be observed by human eyes. The Low-light image intensifiers are a photoelectric device formed by an intensifier tube and a high-voltage power supply through an encapsulation process, the imaging principle of which is that a photoelectric cathode converts an optical image into an electronic image, an electronic optical imaging system (electrode system) transfers the electronic image to a fluorescent screen and, in the process of transferring, enhances the electronic energy and scales the electronic image, and the fluorescent screen performs an electro-optical conversion to convert the electronic image into a visible light image. This imaging principle has the advantages of continuous target surface for the photoelectric imaging surface, and high resolution, clear imaging, visual ability that are close to the human eye. In terms of development stage, the low-light image intensifiers can be divided into first generation, second generation, third generation and second and a half generation.

Because the low-light night vision technology has different development levels in different regions, the price of the same low-light image intensifier also differs greatly in different regions, and there is a need for users in technologically developed regions to buy a night vision device housing and a low-light image intensifier separately. As a result, head-mounted night vision products developed on the basis of a fixed model image intensifier cannot meet the customer needs. In addition, in the actual use of night vision devices, because the low-light image intensifier can be easily damaged under bright light, an important need of the night vision device users is the availability of local image intensifier resources for product maintenance.
Chinese utility patent CN210005790U discloses a binocular night vision device which comprises a first lens barrel, a second lens barrel, and a barrel position adjusting mechanism. In the first lens barrel and the second lens barrel, an image intensifier is arranged in the main lens barrel under the combined action of an image intensifier positioning hole of the objective lens module and an image intensifier base of the eyepiece module. A first lens barrel rotating bracket is rotatably connected with one end of a main shell of the barrel position adjusting mechanism, and a second lens barrel rotating bracket is rotatably connected with the other end of the main shell.

### TECHNICAL PROBLEM

In order to solve the existing technical problems, the present application provides a low-light night vision device, which can be adapted to different image intensifiers, and is easy to be assembled and replaced by the user.

### TECHNICAL SOLUTION

In order to achieve the above objective, the technical solution of the embodiments of the present application is realized below.

Embodiments of the present application provide a low-light night vision device including a first monocular assembly, the first monocular assembly comprising:
a housing comprising a front cover plate and a lens barrel, the front cover plate mounted at a front opening of the lens barrel;
a low-light objective lens group mounted on the front cover plate and defining a low-light optical axis;
an image intensifier bracket arranged at a rear end of the low-light objective lens group along the low-light optical axis, detachably connected to the front cover plate, and comprising a mounting barrel, an adjustment thread ring and an elastic member, the mounting barrel being configured to allow an image intensifier to be mounted therein in such a manner that: a front end of the image intensifier is abutted against the front cover plate, and a rear end of the image intensifier is abutted against a rear end of the mounting barrel by means of the elastic member;
an eyepiece group arranged at a rear end along the low-light optical axis;
wherein opposite ends of the adjustment thread ring along the low-light optical axis are connected to the front cover plate and the mounting barrel, respectively, with threaded connections in opposite directions, so that the mounting barrel and the front cover plate move toward or away from each other along the low-light optical axis upon rotation of the adjustment thread ring.

In one embodiment, a threaded interface is formed at a rear end of the front cover plate, and a front end of the mounting barrel is provided with a barrel mouth thread, external threads of the barrel mouth thread and the threaded interface are in opposite helical directions; an inner wall surface of an end of the adjustment thread ring facing the mounting barrel is provided with a first internal thread threaded with the barrel mouth thread, an inner wall surface of an end of the adjustment thread ring facing the front cover plate is provided with a second internal thread threaded with the threaded interface, and the first internal thread and the second internal thread are in opposite helical directions.

In one embodiment, the adjustment thread ring is in the form of an annular structure larger than an outer wall of the image intensifier, a surface of the adjustment thread ring is provided with knurls, and a plurality of small openings for observation of a mounting position is defined through an annular wall of the adjustment thread ring around the low-light optical axis.

In one embodiment, the front cover plate is provided with a low-light lens hole for mounting the low-light objective lens group, the threaded interface is formed at a rear end of the low-light lens hole about a central axis of the low-light lens hole, the threaded interface extends about the low-light lens hole rearwardly along the low-light optical axis, and the front end of the image intensifier is abutted against an end surface of the threaded interface.

In one embodiment, a side wall of the threaded interface is provided with a positioning notch that is opened rearwardly, a lug protrudes from the front end of the mounting barrel, and the lug is engaged into the positioning notch along the direction of the low-light optical axis to constrain the rotational freedom of the mounting barrel around the low-light optical axis.

In one embodiment, the mounting barrel is cylindrical in shape and is provided with cutouts.

In one embodiment, a mounting post is provided on an outer wall surface of the mounting barrel, for mounting a main control board.

In one embodiment, the main control board integrates a power supply circuit for supplying power to the image intensifier, a spring tab is removably mounted on the main control board by means of a conductive screw, and the spring tab extends into an interior of the mounting barrel via the cutout to be in contact with a contact of the image intensifier.

In one embodiment, the first monocular assembly further comprises an infrared lens group and an image combiner, the low-light night vision device further comprises a display assembly, the infrared lens group is mounted on the front cover plate and defines an infrared optical axis parallel to the low-light optical axis, the image combiner is disposed between the image intensifier and the eyepiece group along the low-light optical axis, the display assembly is disposed on one side of the image combiner and connected to the infrared lens group for displaying a thermal image of sensed infrared light, the image combiner is fixedly connected to the rear end of the mounting barrel to form a one-piece holder with the mounting barrel.

In one embodiment, the image combiner comprises an optical lens and a metal frame enclosing the optical lens. The display assembly is fixed directly to the image combiner to form a one-piece unit, or the metal frame is provided with a screen holder for fixing the display assembly, the display assembly being mounted to the screen holder by means of an adjustment spacer.

In one embodiment, the front cover plate is in the shape of a flat plate and is provided with an infrared lens hole for mounting the infrared lens group, the infrared lens group comprises an infrared objective lens arranged along the infrared optical axis, an infrared objective lens flange, a flange sealing ring and an infrared detector, the infrared objective lens being fixed in the infrared objective lens flange, the infrared objective lens flange being mounted through the flange sealing ring into the infrared lens hole of the front cover plate from the front end of the infrared lens hole, and the infrared detector being mounted to the infrared lens hole from the rear end of the infrared lens hole.

In one embodiment, the front cover plate is mounted at the front opening of the lens barrel by means of a front cover seal, and the eyepiece group is mounted to the rear end of the lens barrel by means of an eyepiece end sealing foam gasket.

In one embodiment, the low-light night vision device further includes a second monocular assembly, the first monocular assembly and the second monocular assembly being interconnected by a connecting bridge assembly.

In one embodiment, the first monocular assembly further comprises a bridge interface member for connecting with the connecting bridge assembly, the bridge interface member being mounted at an opening at a top of the lens barrel by a bridge interface seal.

### BENEFICIAL EFFECTS

The low-light night vision device provided by the embodiments of the present application has at least the following beneficial effects: the present application provides a low-light night vision device, which adopts an image intensifier bracket to detachably connect the image intensifier to the front cover plate, and the image intensifier can be installed, replaced, and adjusted through the image intensifier bracket, making the low-light night vision device compatible with different image intensifiers. The image intensifier bracket features a small size, simple structure, high stability, and good repeatability for disassembly/assembly, which enables the low-light night vision device users to disassemble and replace the low-light image intensifier, and reset the optical system by themselves to ensure the quality of optical imaging.

### BRIEF DESCRIPTION OF THE DRAWINGS

FIG. 1 is a perspective view of a low-light night vision device according to one embodiment of the present application.
FIG. 2 is a perspective view of a right eyepiece assembly of the low-light night vision device of FIG. 1.
FIG. 3 is an exploded view of the right eyepiece assembly of FIG. 2.
FIG. 4 is a partial side view showing the right eyepiece assembly of FIG. 3 mounted on a front cover plate.
FIG. 5 is an exploded view showing the parts mounted on the front cover plate of FIG. 4.
FIG. 6 is a perspective view of a mounting barrel and an image combiner of FIG. 5.
FIG. 7 is a perspective view of the mounting barrel and the image combiner of FIG. 6, viewed from another angle.

### Reference Numerals:

Right eyepiece assembly 10;
Housing 11, low-light objective lens group 12, infrared lens group 13, eyepiece group 14, bridge interface member 15, image intensifier bracket 16, display assembly 17, image intensifier 18, antenna assembly 19, main control board 101, spring tab 102;
Front cover plate 111, lens barrel 112, front cover seal 113, eyepiece end sealing foam gasket 114, bridge interface seal 115;
Low-light lens hole 1111, infrared lens hole 1112, threaded interface 1113, positioning notch 1114;
Infrared objective lens 131, infrared objective lens flange 132, flange seal 133, infrared detector 134;
Eyepiece lens set 141, eyepiece handwheel 142;
Mounting barrel 161, adjustment thread ring 162, image combiner 163, elastic member 164;
Barrel mouth thread 1611, cutout 1612, lug 1613, mounting post 1614;
First internal thread 1621, second internal thread 1622;
Optical lens 1631, metal frame 1632;
Left eyepiece assembly 20;
Connecting bridge assembly 30;
Low-light night vision device 100.

### DESCRIPTION OF THE EMBODIMENTS

The technical solutions of the present disclosure are hereinafter described in further detail in connection with the drawings and specific embodiments.

Unless otherwise defined, all technical and scientific terms used herein have the same meaning as commonly understood by those skilled in the art to which the present disclosure pertains. Terms used in the present disclosure are intended for describing specific embodiments only and are not intended to limit the manner in which the present disclosure can be realized. The term "and/or" as used herein is meant to cover any and all combinations of one or more of the relevant listed items.

In the description of the present disclosure, it is to be understood that the terms "center", "up", "down", "front" "back", "left", "right", "vertical", "horizontal", "top", "bottom", "inside", "outside", and other indications of the orientations or positional relationships are based on those shown in the figures and are intended only to facilitate the description of the present disclosure and to simplify the description, and are not intended to indicate or imply that the device or element referred to must have a particular orientation, be constructed and operated in a particular orientation, and therefore are not to be construed as limitations of the present disclosure. In the description of the present disclosure, unless otherwise indicated, "plurality" means two or more.

In the description of the present disclosure, it is to be noted that, unless otherwise expressly specified and limited, the terms "mounted", "connected", "coupled" are to be understood in a broad sense. For example, it may be a fixed connection or a detachable connection, or a connection in one piece; it may be a direct connection, an indirect connection through an intermediate medium, or a connection between internal spaces of two elements. For those of ordinary skill in the art, the specific meaning of the above terms in the present disclosure may be understood in accordance with the specific circumstances.

The differences in structural dimensions of the low-light image intensifiers of different specifications mainly lie in the length of the device and the positions of the fluorescent screen and the cathode surface. Existing night vision devices generally have a fixed position of the image intensifier, and optical alignment is performed through focus-compensation of the eyepiece and objective lens, specifically as follows: by adjusting the relative position of the eyepiece and the fluorescent screen to compensate for the parallax (e.g. a clear observation can be achieved by adjusting the eyepiece even if the human eye is near-sighted); and by adjusting the relative position between the objective lens and the cathode surface to compensate for the aberration (for example, the position of the imaging surface varies with different states of the optic lens at different temperatures, making the image become blurred, which can be corrected by adjusting the objective lens). The present application provides a low-light night vision device that can be adapted to a variety of low-light image intensifiers and ensure the stability of the optical system.

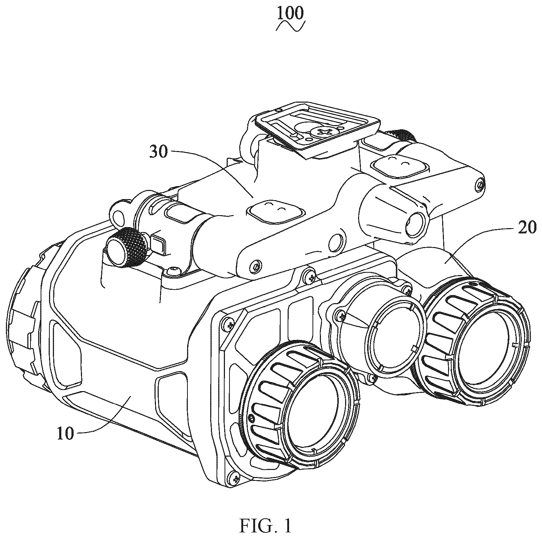

FIG. 1 is a schematic diagram of the structure of a low-light night vision device 100 provided by an embodiment of the present application. The illustrated low-light night vision apparatus 100 includes a right eyepiece assembly 10 (i.e., a first monocular assembly), a left eyepiece assembly 20 (i.e., a second monocular assembly), and a connecting bridge assembly 30. The right eyepiece assembly 10 and the left eyepiece assembly 20 are interconnected by the connecting bridge assembly 30 to form a binocular dual-channel night vision device.

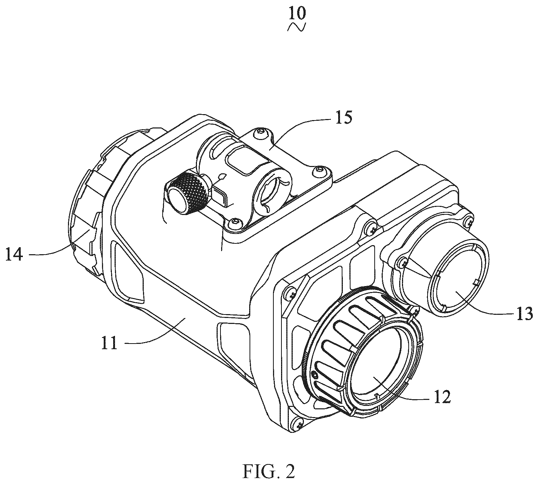

Referring to FIG. 2, the structure of the right eyepiece assembly 10 for low-light and infrared dual-light fusion imaging is illustrated, which integrates a low-light objective lens group 12 for realizing low-light night vision, an infrared lens group 13 for realizing thermal imaging, and a bridge interface member 15 for realizing gull-wing flip function. The bridge interface member 15 is connected to the connecting bridge assembly 30 so as to connect the right eyepiece assembly 10 and the left eyepiece assembly 20 together. As such, the low-light night vision device 100 is a binocular, dual-channel, dual-light fusion night vision device, and has the functions of flip-up and gull-wing flip.

Referring to FIG. 2 through FIG. 5, specifically, the right eyepiece assembly 10 includes a housing 11, the low-light objective lens group 12, the infrared lens group 13, an eyepiece group 14, the bridge interface member 15, a main control board 101, an image intensifier bracket 16, a display assembly 17, an image intensifier 18, and an antenna assembly 19. The low-light objective lens group 12, the infrared lens group 13, the eyepiece group 14, and the bridge interface member 15 are mounted on the housing 11, and the main control board 101, the image intensifier bracket 16, the display assembly 17, the image intensifier 18 and the antenna assembly 19 are mounted inside the housing 11.

It is to be noted that the low-light night vision device 100 may be sold as a product without the image intensifier 18 inside the right eyepiece assembly 10, and after purchasing the product, the consumer may purchase and mount the image intensifier by himself according to his/her personal preference.

The housing 11 includes a front cover plate 111 and a lens barrel 112. The front cover plate 111 is mounted at a front opening of the lens barrel 112 with a front cover seal 113 positioned between the front cover 111 and the lens barrel 112, the eyepiece group 14 is installed at a rear end of the lens barrel 112 with an eyepiece end seal foam gasket 114 positioned between the eyepiece group 14 and the lens barrel 112, and the bridge interface member 15 is installed at an opening at a top of the lens barrel 112 with a bridge interface seal 115 positioned between the opening and the bridge interface member 15, so as to seal the interior of the housing 11 to ensure the sealing of the overall structure of the right eyepiece assembly 10.

The low-light objective lens group 12 and the infrared lens group 13 are mounted on the front cover plate 111. The image intensifier bracket 16 is adjustably connected to the front cover plate 111. The eyepiece group 14, the display assembly 17, the image intensifier 18 and the main control board 101 are each mounted to the image intensifier bracket 16. The antenna assembly 19 is mounted inside the lens barrel 112.

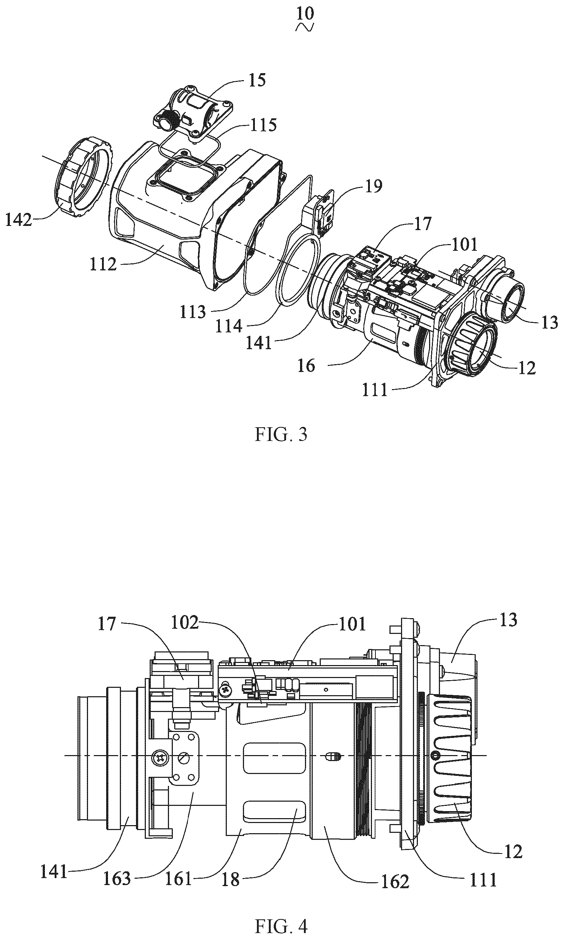

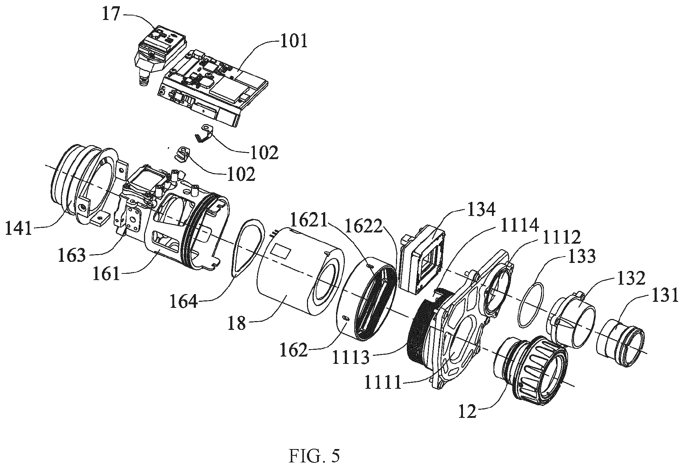

Referring to FIG. 4 and FIG. 5, the front cover plate 111 is in the form of a flat plate that closes the front opening of the lens barrel 112, which defines a low-light lens hole 1111 and an infrared lens hole 1112 for mounting the low-light objective lens group 12 and the infrared lens group 13, respectively. The low-light objective lens group 12 and infrared lens group 13 are mounted side by side to the front cover plate 111, with a low-light optical axis being parallel to an infrared optical axis. Since the low-light objective lens group 12 and the infrared lens group 13 are in the same plane of the front cover plate 111, alignment of the optical system is made very simple.

A threaded interface 1113 is formed at the rear end of the low-light lens hole 1111 around the axis of the low-light lens hole 1111 (the low-light optical axis), for mounting and adjustment of the image intensifier bracket 16. A side wall of the threaded interface 1113 is further provided with a positioning notch 1114 that is opened rearwardly, and in the illustrated embodiment, there are two positioning notches 1114 arranged diametrically in the threaded interface 1113. The threaded interface 1113 for connecting with the image intensifier bracket 16 is designed directly on the front cover plate 111, which adopts a one-piece design that can eliminate the adapter and is more stable, and the thickness of the bottom of the threaded interface 1113 also enhances the overall structural strength of the front cover plate 111. At the same time, a plurality of rib structures may be formed on the surface of the front cover plate 111 to reduce thickness and weight without affecting the overall strength.

The infrared lens group 13 includes an infrared objective lens 131, an infrared objective lens flange 132, a flange sealing ring 133, and an infrared detector 134. The infrared objective lens 131 is fixed in the infrared objective lens flange 132, the infrared objective lens flange 132 is mounted to the infrared lens hole 1112 on the front cover plate 111 through the flange sealing ring 133 from a front end of the infrared lens hole 1112, and the infrared detector 134 is mounted along the infrared optical axis to a rear end of the infrared lens hole 1112, for detecting infrared light focused by the infrared objective lens 131. The existing infrared objective lens and the infrared detector are generally mounted on opposite sides of the cover plate or the housing, respectively, components of the entire infrared lens group are arranged in series through the cover plate or the housing, and the infrared imaging adjustment is carried out by adjusting the relative position between the infrared objective lens and the infrared detector. In the illustrated embodiment, the infrared objective lens 131 is not directly mounted on the front cover plate 111, but is mounted on the front cover plate 111 via the infrared objective lens flange 132, and the infrared imaging position adjustment is carried out by moving the infrared objective lens flange 132 (which brings the infrared objective lens 131 to move), which is more safe in protecting the relatively vulnerable infrared detector as compared to direct movement of the infrared detector in the prior art.

The eyepiece group 14 includes an eyepiece lens set 141 and an eyepiece handwheel 142. The eyepiece lens set 141 is mounted along the low-light optical axis to the image intensifier bracket 16 and projects out of the rear end of the lens barrel 112, and the eyepiece handwheel 142 is mounted to the eyepiece lens set 141 from the rear end. Existing eyepieces are generally mounted directly on the housing, but the thin shell type structure can be easily deformed by force. In the illustrated embodiment, in order to improve the stability of an image combining optical system, the eyepiece lens group 141 is directly assembled with the image intensifier bracket 16 (specifically, an image combiner 163 on the image intensifier), and the eyepiece end sealing foam gasket 114 provides sealing and buffering between the assembled eyepiece lens group 141/image intensifier bracket 16 and the lens barrel 112 the lens barrel 112, thereby reducing the effect of the deformation of the lens barrel 112 on the optical mechanism. In addition, instead of through the conventional end mounting manner, the eyepiece lens group 141 is mounted to the image intensifier bracket 16 by means of side locking screws, which can reduce the diameter of the lens group.

The low-light objective lens group 12 and the image intensifier 18 are the main components of the low-light night vision system of the low-light night vision device 100. The infrared lens group 13, i.e., the infrared objective lens 131 and the infrared detector 134, is the main component of the thermal imaging system. The image intensifier bracket 16 (the image combiner 163 on it), the display assembly 17 and the eyepiece lens group 141 are the main components of the image combining and display system. The three optical systems, i.e., the low-light night vision system, the thermal imaging system and the image combining and display system, are all collectively mounted to the front cover plate 111 to form the module shown in FIG. 4, making the overall structure very compact.

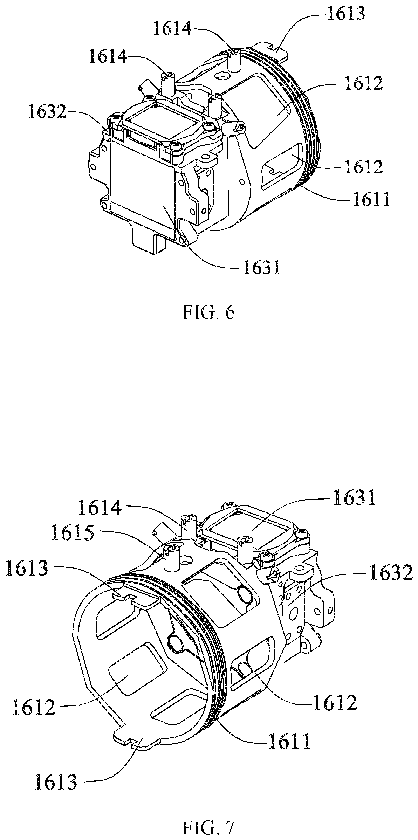

The image intensifier bracket 16 is provided at the rear end of the low-light objective lens group 12 along the low-light optical axis, and is detachably mounted to the front cover plate 111. The image intensifier bracket 16 includes a mounting barrel 161, an adjustment thread ring 162, an image combiner 163, and an elastic member 164. The mounting barrel 161 is a main portion for receiving the image intensifier 18, and one end of the adjustment thread ring 162 is threaded on a front end of the mounting barrel 161, and the other end is threadedly connected to the threaded interface 1113 at the rear end of the front cover plate 111. The elastic member 164 is provided at a bottom of the mounting barrel 161 and between the image intensifier 18 and the image combiner 163 to ensure the mounting stability of the image intensifier 18 and to cooperate with the adjustment thread ring 162 for position adjustment in the direction of the low-light optical axis. The image combiner 163 is located at the rear end of the mounting barrel 161, and the front end of the mounting barrel 161 defines an opening for allowing the image intensifier 18 to be placed into the mounting barrel 161 and is provided with a barrel mouth thread 1611. Referring to FIG. 6, lugs 1613 protrude forwardly from the front end of the mounting barrel 161, and mounting posts 1614 are provided on an outer wall surface of the mounting barrel 161. The image combiner 163 and the mounting barrel 161 for containing the image intensifier 18 are combined to form the image intensifier bracket 16 using the one-piece design, making the support structure more stable.

Referring to FIG. 6 and FIG. 7, the mounting barrel 161 adopts a cylindrical base structure to securely protect the image intensifier 18 therein. The base structure is made of an ultra-light magnesium alloy material and is further weight-reduced by cutouts 1612 defined in the mounting barrel 161. The image intensifier 18 is loaded via the opening at the front end of the mounting barrel 161, and the lugs 1613 at the front end of mounting barrel 161 pass through the adjustment thread ring 162 and are engaged into the positioning notches 1114 of the threaded interface 1113, thereby constraining the rotational freedom of the mounting barrel 161 around the low-light optical axis.

A first internal thread 1621 is provided on an inner wall surface of an end of the adjustment thread ring 162 facing the mounting barrel 161, for threaded connection with the barrel mouth thread 1611 of the mounting barrel 161. A second internal thread 1622 is provided on an inner wall surface of the other end of the adjustment thread ring 162 facing the front cover plate 111, and the mounting barrel 1611 and the front cover plate 111 are connected in the direction of the low-light optical axis through the threaded connection between second internal thread 1622 and the threaded interface 1113 on the front cover plate 111. The internal threads of the first internal thread 1621 and the second internal thread 1622 are in opposite helical directions, and correspondingly, the external threads of the barrel mouth thread 1611 and the threaded interface 1113 are in opposite helical directions, so that the first internal thread 1621 and the barrel mouth thread 1611 form a threaded connection in an opposite direction to that between the second internal thread 1622 and the threaded interface 1113, and by rotating the adjustment thread ring 162, the position of the mounting barrel 161 and the image combiner 163 relative to the front cover plate 111 on the low-light optical axis varies. A front end of the image intensifier 18 is abutted against an end surface of the threaded interface 113, and a rear end of the image intensifier 18 is pressed against the bottom of the mounting barrel 161 by one end of the elastic member 164. By rotating the adjustment thread ring 162, the mounting barrel 161 is moved toward or away from the front cover plate 111, and the position of the image combiner 163, which is fixedly connected to the mounting barrel 161, is changed accordingly, so that the relative distance between the image combiner 163 and the image intensifier 18 can be adjusted, and different models of the image intensifiers 18 are applicable.

The adjustment thread ring 162 is the key for compatibility with different models of the image intensifiers, and the relative positions of the image combiner 163 and the image intensifier 18 in the direction of the low-light optical axis can be adjusted through the cooperation of the adjustment thread ring 162, the elastic member 164, the mounting barrel 161 and the front cover plate 111. The adjustment thread ring 162 adopts an annular structure that is uniformly enlarged in diameter from the outer wall of the image intensifier 18, which is a structure form that minimizes the overall diameter size of the right eyepiece assembly 10. The adjustment thread ring 162 is also essential for connecting components of the entire right eye low-light objective group together.

The adjustment thread ring 162 may be made of an aluminum alloy material with high hardness, and may be surface-processed with twill knurling to increase friction for easy hand-twisting. An annular wall of the adjustment thread ring 162 may further define four holes around the low-light optical axis, through which the mounting position inside the adjustment thread ring 162 can be observed.

The image combiner 163 is a prismatic image combining device including a metal frame 1632 and an optical lens 1631, located between the eyepiece group 14 and the image intensifier 18. The image combiner 163 has the prism fully enclosed by a metal material, which protects the interior optical lens 1631. Existing image combiners are generally mounted directly inside the housing, which can be easily affected by the deformation of the housing, and it may not be convenient to install and align the image combiner in the case of a large depth of an interior of the housing. Compared to the existing design, connecting the image combiner 163 and the mounting barrel 161 into a single unit can reduce the adapter between the image combiner 163 and the image intensifier 18, make the overall mechanism more stable, and also allow alignment of the image combiner 163 to be carried out without being blocked by the housing, thus reducing the mounting and alignment difficulty.

A display bracket for fixing the display assembly 17 may also be integrated on the metal frame 1632 of the image combiner 163, which facilitates direct mounting of the display assembly 17 to the metal frame 1632 of the image combiner 163.

The elastic member 164 is provided within the mounting barrel 161 and abutted against the end of the image intensifier 18 away from the adjustment thread ring 162, so that the image intensifier 18 can be positioned and is compatible with differences in the dimension of different image intensifiers 18 in the direction of the low-light optical axis. In the illustrated embodiment, the elastic member 164 is a spring sheet partially hollowed out on the low-light optical axis so as not to interfere with light propagation along the low-light optical axis. In other embodiments, the elastic member 164 may also be a compression spring or a resilient rubber pad with a center hole, etc., which are not exhaustively listed herein.

The display assembly 17 is in signal connection with the infrared detector 134 to receive and display a thermal image of the infrared light sensed by the infrared detector 134. The display assembly 17 includes an OLED screen and a screen holder, and the screen holder fully encloses the OLED screen to protect the OLED screen and is mounted on the mounting barrel 161 at a position corresponding to the position of the image combiner 163. When the low-light night vision device 100 is to use a fixed model of image intensifier 18, the display assembly 17 and the image combiner 163 can be designed as one piece. Of course, in order to accommodate more models of image intensifiers, in the illustrated embodiment, the display assembly 17 is separated from the image combiner 163 fixed on the mounting barrel 161, and the relative position between the display assembly 17 and the image combiner 163 can be adjusted by means of an adjustment spacer, for combining the infrared and the low-light images.

The main control board 101 is secured to the mounting posts 1614 on the mounting barrel 161 by fasteners, thereby securing the main control board 101 to the barrel wall of the mounting barrel 161. The main control board 101 integrates a power supply circuit for the image intensifier 18, and for the power supply scheme of the image intensifier 18, in addition to the power supply method using connecting cables, gold-plated copper spring tabs 102 are also provided for the power supply. The spring tabs 102 are removably mounted on the main control board 101 by means of conductive screws, and the spring tabs 102 can be extended into the interior of the mounting barrel 161 via the cutout 1612 of the mounting barrel 161 to be in contact with contacts on the image intensifier 18. As such, upon being mounted into the mounting barrel 161, the contacts of the image intensifier 18 can directly contact the spring tabs 102 to realize the power supply, thus providing a quick-mount solution for the user to assemble the image intensifier on his own.

In the above-described low-light night vision device 100, the mounting structure of the image intensifier 18 has a smaller size, which makes it possible to reduce the overall weight of this product to 550g, which is significantly less than the weight of existing products of the same type, while realizing the functions of binocular dual-channel, dual-light fusion night vision imaging, flip-up and gull-wing flip.

While the low-light night vision device 100 is illustrated as a binocular dual-channel night vision device in this embodiment, it should be noted that, in other embodiments, the low-light night vision device 100 may also be a monocular night vision device having only the right eyepiece assembly 10, which is not limited herein.

On the other hand, in the illustrated embodiment, the right eyepiece assembly 10 is a low-light and infrared dual-light fusion night vision monocular, but in other embodiments, the right eyepiece assembly 10 may also be a single-light night vision monocular with only low-light imaging. When the right eyepiece assembly 10 is a low-light night vision monocular, there is no need to form the infrared lens hole 1112 in the front cover plate 111, and the infrared lens group 13, the display assembly 17, and the image combiner 163 on the image intensifier bracket 16 may be all omitted.

In summary, the present application provides a low-light night vision device, which adopts an image intensifier bracket compatible with a variety of low-light image intensifiers including domestic second and a half-generation image intensifiers and domestic and foreign third-generation image intensifiers, in combination with the mounting and alignment structure of the front cover plate, so that the needs of users in different regions can be better met. The low-light night vision device of the present application can realize the use of different models of low-light image intensifier in the same night vision device, and the low-light and infrared dual-light fusion night vision imaging. The mounting and alignment structure features a small size, simple structure, high stability, and good repeatability for disassembly/assembly, which enables the low-light night vision device users, without special training, to disassemble and replace the low-light image intensifier, and reset the optical system by themselves to ensure the quality of optical imaging. The low-light night vision device of the present application can meet the user needs of being able to realize the configuration suitable for him/her on the same night vision device.

It is to be noted that, in this disclosure, the terms "comprise", "include" or any other variations thereof are intended to cover non-exclusive inclusion, such that a process, method, article or apparatus comprising a set of elements includes not only those elements but also other elements that are not expressly listed or that are inherent to such process, method, article or apparatus. Without further limitation, the fact that an element is defined by the phrase "include a ..." does not exclude the existence of another identical element in the process, method, article, or device including that element.

The foregoing are only specific embodiments of the present disclosure, but the scope of the present disclosure is not limited thereto. Various changes or substitutions that may be readily conceivable by those skilled in the art within the scope of the technology disclosed in the present disclosure shall fall into the scope of the present disclosure. Therefore, the scope of the present disclosure shall be determined based on the appended claims.

## Claims

1. A low-light night vision device, comprising a first monocular assembly, the first monocular assembly comprising:
a housing (11) comprising a front cover plate (111) and a lens barrel (112), the front cover plate (111) mounted at a front opening of the lens barrel (112);
a low-light objective lens group (12) mounted on the front cover plate (111) and defining a low-light optical axis;
an image intensifier bracket (16) arranged at a rear end of the low-light objective lens group (12) along the low-light optical axis, detachably connected to the front cover plate (111), and comprising a mounting barrel (161) configured to allow an image intensifier to be mounted therein, an adjustment thread ring (162) having opposite ends along the low-light optical axis, and an elastic member (164), the mounting barrel (161) being configured to allow an image intensifier (18) to be mounted therein in such a manner that: a front end of the image intensifier (18) is abutted against the front cover plate (111), and a rear end of the image intensifier (18) is abutted against a rear end of the mounting barrel (161) by means of the elastic member (164);
an eyepiece group (14) arranged at a rear end along the low-light optical axis;
wherein the opposite ends of the adjustment thread ring (162) along the low-light optical axis are connected to the front cover plate (111) and the mounting barrel (161), respectively, so that the mounting barrel (161) and the front cover plate (111) move toward or away from each other along the low-light optical axis upon rotation of the adjustment thread ring (162).

2. The low-light night vision device according to claim 1, wherein the opposite ends of the adjustment thread ring (162) along the low-light optical axis are connected to the front cover plate (111) and the mounting barrel (161), respectively, with threaded connections in opposite helical directions, so that the mounting barrel (161) and the front cover plate (111) move toward or away from each other along the low-light optical axis upon rotation of the adjustment thread ring (162).

3. The low-light night vision device according to claim 1 or claim 2, wherein the front cover plate (111) is configured to position a front end of the image intensifier (18), and a rear end of the mounting barrel (161) away from the front cover plate (111) is configured to position a rear end of the image intensifier (18).

4. The low-light night vision device according to any one of claims 1 to 3, wherein in that a threaded interface (1113) is formed at a rear end of the front cover plate (111), and a front end of the mounting barrel (161) is provided with a barrel mouth thread (1611), external threads of the barrel mouth thread (1611) and the threaded interface (1113) are in opposite helical directions; an inner wall surface of an end of the adjustment thread ring (162) facing the mounting barrel (161) is provided with a first internal thread (1621) threaded with the barrel mouth thread (1611), an inner wall surface of an end of the adjustment thread ring (162) facing the front cover plate (111) is provided with a second internal thread (1622) threaded with the threaded interface (1113), and the first internal thread (1621) and the second internal thread (1622) are in opposite helical directions.

5. The low-light night vision device according to any one of claims 1 to 4, wherein a plurality of openings for observation of a mounting position is defined through an annular wall of the adjustment thread ring (162) around the low-light optical axis.

6. The low-light night vision device according to claim 4, wherein the front cover plate (111) is provided with a low-light lens hole (1111) for mounting the low-light objective lens group (12), the threaded interface (1113) is formed at a rear end of the low-light lens hole (1111) about a central axis of the low-light lens hole (1111), the threaded interface (1113) extends about the low-light lens hole (1111) rearwardly along the low-light optical axis, and the front end of the image intensifier (18) is abutted against an end surface of the threaded interface (1113).

7. The low-light night vision device according to claim 6, wherein a side wall of the threaded interface (1113) is provided with a positioning notch (1114) that is opened rearwardly, a lug (1613) protrudes from the front end of the mounting barrel (161), and the lug (1613) is engaged into the positioning notch (1114) along the direction of the low-light optical axis to constrain the rotational freedom of the mounting barrel (161) around the low-light optical axis.

8. The low-light night vision device according to any one of claims 1 to 7, wherein the mounting barrel (161) is cylindrical in shape and is provided with cutouts (1612).

9. The low-light night vision device according to claim 8, wherein a mounting post (1614) is provided on an outer wall surface of the mounting barrel (161), for mounting a main control board (101).

10. The low-light night vision device according to claim 9, wherein the main control board (101) integrates a power supply circuit for supplying power to the image intensifier (18), a spring tab (102) is removably mounted on the main control board (101) by means of a conductive screw, and the spring tab (102) extends into an interior of the mounting barrel (161) via the cutout (1612) to be in contact with a contact of the image intensifier (18).

11. The low-light night vision device according to any one of claims 1 to 10, wherein the first monocular assembly further comprises an infrared lens group (13) and an image combiner (163), the low-light night vision device further comprises a display assembly (17), the infrared lens group (13) is mounted on the front cover plate (111) and defines an infrared optical axis parallel to the low-light optical axis, the image combiner (163) is disposed between the image intensifier (18) and the eyepiece group (14) along the low-light optical axis, the display assembly (17) is disposed on one side of the image combiner (163) and connected to the infrared lens group (13) for displaying a thermal image of sensed infrared light, the image combiner (163) is fixedly connected to the rear end of the mounting barrel (161) to form a one-piece holder with the mounting barrel (161).

12. The low-light night vision device according to claim 11, wherein the image combiner (163) comprises an optical lens (1631) and a metal frame (1632) enclosing the optical lens (1631); the display assembly (17) is fixed directly to the image combiner (163) to form a one-piece unit, or the metal frame ( 1632) is provided with a screen holder for fixing the display assembly (17), the display assembly (17) being mounted to the screen holder by means of an adjustment spacer.

13. The low-light night vision device according to claim 11. wherein the front cover plate (111) is in the shape of a flat plate and is provided with an infrared lens hole (1112) for mounting the infrared lens group (13), the infrared lens group (13) comprises an infrared objective lens (131) arranged along the infrared optical axis, an infrared objective lens flange (132), a flange sealing ring (133) and an infrared detector (134), the infrared objective lens (131) being fixed in the infrared objective lens flange (132), the infrared objective lens flange (132) being mounted through the flange sealing ring (133) into the infrared lens hole (1112) of the front cover plate (111) from the front end of the infrared lens hole (1112), and the infrared detector (134) being mounted to the infrared lens hole (1112) from the rear end of the infrared lens hole (1112).

14. The low-light night vision device according to any one of claims 1 to 13, further comprising a second monocular assembly, the first monocular assembly and the second monocular assembly being interconnected by a connecting bridge assembly (30), the first monocular assembly further comprises a bridge interface member (15) for connecting with the connecting bridge assembly (30), the bridge interface member (15) being mounted at an opening at a top of the lens barrel (112) by a bridge interface seal (115).

## Patentansprüche

1. Schwachlichtnachtsichtvorrichtung, umfassend eine erste Monokularbaugruppe, wobei die erste Monokularbaugruppe umfasst:
ein Gehäuse (11) mit einer vorderen Abdeckplatte (111) und einem Objektivtubus (112), wobei die vordere Abdeckplatte (111) an einer vorderen Öffnung des Objektivtubus (112) montiert ist;
eine Schwachlichtobjektivlinsengruppe (12), die an der vorderen Abdeckplatte (111) montiert ist und eine optischen Schwachlichtachse definiert;
eine Bildverstärkerhalterung (16), die an einem hinteren Ende der Schwachlichtobjektivlinsengruppe (12) entlang der optischen Schwachlichtachse angeordnet ist, lösbar mit der vorderen Abdeckplatte (111) verbunden ist und einen Montagetubus (161), der dazu konfiguriert ist, einen Bildverstärker zur Montage in sich aufzunehmen, einen Gewindestellring (162) mit gegenüberliegenden Enden entlang der optischen Schwachlichtachse und ein elastisches Element (164) umfasst, wobei der Montagetubus (161) dazu konfiguriert ist, einen Bildverstärker (18) derart zur Montage in sich aufzunehmen, dass: ein vorderes Ende des Bildverstärkers (18) an der vorderen Abdeckplatte (111) anliegt und ein hinteres Ende des Bildverstärkers (18) mittels des elastischen Elements (164) an einem hinteren Ende des Montagetubus (161) anliegt;
eine Okulargruppe (14), die an einem hinteren Ende an der optischen Schwachlichtachse angeordnet ist;
wobei die gegenüberliegenden Enden des Gewindestellrings (162) an der optischen Schwachlichtachse jeweils mit der vorderen Abdeckplatte (111) und dem Montagetubus (161) verbunden sind, sodass der Montagetubus (161) und die vordere Abdeckplatte (111) sich an der optischen Schwachlichtachse zueinander hin oder voneinander weg bewegen, wenn der Gewindestellring (162) gedreht wird.

2. Schwachlichtnachtsichtvorrichtung nach Anspruch 1, wobei die gegenüberliegenden Enden des Gewindestellrings (162) an der optischen Schwachlichtachse jeweils mit gegenläufigen Gewindeverbindungen mit der vorderen Abdeckplatte (111) und dem Montagetubus (161) verbunden sind, sodass der Montagetubus (161) und die vordere Abdeckplatte (111) sich an der optischen Schwachlichtachse zueinander hin oder voneinander weg bewegen, wenn der Gewindestellring (162) gedreht wird.

3. Schwachlichtnachtsichtvorrichtung nach Anspruch 1 oder Anspruch 2, wobei die vordere Abdeckplatte (111) dazu konfiguriert ist, ein vorderes Ende des Bildverstärkers (18) zu positionieren, und ein hinteres Ende des Montagetubus (161), das von der vorderen Abdeckplatte (111) abgewandt ist, dazu konfiguriert ist, ein hinteres Ende des Bildverstärkers (18) zu positionieren.

4. Schwachlichtnachtsichtvorrichtung nach einem der Ansprüche 1 bis 3, wobei eine Gewindeschnittstelle (1113) an einem hinteren Ende der vorderen Abdeckplatte (111) gebildet ist und ein vorderes Ende des Montagetubus (161) mit einem Tubusmündungsgewinde (1611) versehen ist, wobei das Außengewinde des Tubusmündungsgewinde (1611) und die Gewindeschnittstelle (1113) gegenläufig sind; wobei eine Innenwandfläche an einem Ende des Gewindestellrings (162), die dem Montagetubus (161) zugewandt ist, mit einem ersten Innengewinde (1621) versehen ist, das mit dem Tubusmündungsgewinde (1611) verschraubt ist, eine eine Innenwandfläche an einem Ende des Gewindestellrings (162), die der vorderen Abdeckplatte (111) zugewandt ist, mit einem zweiten Innengewinde (1622) versehen ist, das mit der Gewindeschnittstelle (1113) verschraubt ist, und das erste Innengewinde (1621) und das zweite Innengewinde (1622) gegenläufig sind.

5. Schwachlichtnachtsichtvorrichtung nach einem der Ansprüche 1 bis 4, wobei eine Vielzahl von Öffnungen zur Beobachtung einer Montageposition durch eine Ringwand des Gewindestellrings (162) hindurch um die optische Schwachlichtachse herum definiert ist.

6. Schwachlichtnachtsichtvorrichtung nach Anspruch 4, wobei die vordere Abdeckplatte (111) mit einem Schwachlichtlinsenloch (1111) zum Montieren der Schwachlichtobjektivlinsengruppe (12) versehen ist, die Gewindeschnittstelle (1113) an einem hinteren Ende des Schwachlichtlinsenlochs (1111) um eine Mittelachse des Schwachlichtlinsenlochs (1111) herum gebildet ist, wobei sich die Gewindeschnittstelle (1113) um das Schwachlichtlinsenloch (1111) herum an der optischen Schwachlichtachse nach hinten erstreckt und das vordere Ende des Bildverstärkers (18) an einer Endfläche der Gewindeschnittstelle (1113) anliegt.

7. Schwachlichtnachtsichtvorrichtung nach Anspruch 6, wobei eine Seitenwand der Gewindeschnittstelle (1113) mit einer nach hinten geöffneten Positionierungskerbe (1114) versehen ist, eine Fahne (1613) vom vorderen Ende des Montagetubus (161) vorsteht und die Fahne (1613) in die Positionierungskerbe (1114) entlang der Richtung der optischen Schwachlichtachse eingreift, um die Rotationsfreiheit des Montagetubus (161) um die optische Schwachlichtachse einzuschränken.

8. Schwachlichtnachtsichtvorrichtung nach einem der Ansprüche 1 bis 7, wobei der Montagetubus (161) zylindrisch ist und mit Aussparungen (1612) versehen ist.

9. Schwachlichtnachtsichtvorrichtung nach Anspruch 8, wobei ein Montagepfosten (1614) zum Anbringen einer Hauptsteuerplatine (101) an einer Außenwand des Montagetubus (161) bereitgestellt ist.

10. Schwachlichtnachtsichtvorrichtung nach Anspruch 9, wobei die Hauptsteuerplatine (101) eine Stromversorgungsschaltung zum Versorgen des Bildverstärkers (18) mit Strom integriert, eine Federlasche (102) mittels einer leitfähigen Schraube lösbar an der Hauptsteuerplatine (101) montiert ist und die Federlasche (102) sich über die Aussparung (1612) ins Innere des Montagetubus (161) erstreckt, um mit einem Kontakt des Bildverstärkers (18) in Kontakt zu stehen.

11. Schwachlichtnachtsichtvorrichtung nach einem der Ansprüche 1 bis 10, wobei die erste Monokularbaugruppe ferner eine Infrarotlinsengruppe (13) und einen Bildkombinator (163) umfasst, wobei die Schwachlichtnachtsichtvorrichtung ferner eine Anzeigebaugruppe (17) umfasst, wobei die Infrarotlinsengruppe (13) an der vorderen Abdeckplatte (111) montiert ist und eine optische Infrarotachse parallel zur optischen Schwachlichtachse definiert, wobei der Bildkombinator (163) zwischen dem Bildverstärker (18) und der Okulargruppe (14) an der optischen Schwachlichtachse angeordnet ist, wobei die Anzeigebaugruppe (17) auf einer Seite des Bildkombinators (163) angeordnet ist und mit der Infrarotlinsengruppe (13) verbunden ist, um ein Wärmebild von erfasstem Infrarotlicht anzuzeigen, wobei der Bildkombinator (163) fest mit einem hinteren Ende des Montagetubus (161) verbunden ist, um mit dem Montagetubus (161) einen einteiligen Halter zu bilden.

12. Schwachlichtnachtsichtvorrichtung nach Anspruch 11, wobei der Bildkombinator (163) eine optische Linse (1631) und einen Metallrahmen (1632) umfasst, der die optische Linse (1631) umschließt; wobei die Anzeigebaugruppe (17) unmittelbar an dem Bildkombinator (163) fixiert ist, um eine einteilige Einheit zu bilden, oder der Metallrahmen (1632) mit einem Bildschirmhalter zum Fixieren der Anzeigebaugruppe (17) versehen ist, wobei die Anzeigebaugruppe (17) mithilfe eines regulierenden Abstandsstücks an dem Bildschirmhalter montiert ist.

13. Schwachlichtnachtsichtvorrichtung nach Anspruch 11, wobei die vordere Abdeckplatte (111) die Form einer flachen Platte aufweist und mit einem Infrarotlinsenloch (1112) zum Montieren der Infrarotlinsengruppe (13) versehen ist, wobei die Infrarotlinsengruppe (13) eine Infrarotobjektivlinse (131), die an der optischen Infrarotachse angeordnet ist, einen Infrarotobjektivlinsenflansch (132), einen Flanschdichtungsring (133) und einen Infrarotdetektor (134) umfasst, wobei die Infrarotobjektivlinse (131) im Infrarotobjektivlinsenflansch (132) fixiert ist, der Infrarotobjektivlinsenflansch (132) durch den Flanschdichtungsring (133) vom vorderen Ende des Infrarotlinsenlochs (1112) her im Infrarotlinsenloch (1112) der vorderen Abdeckplatte (111) montiert ist und der Infrarotdetektor (134) vom hinteren Ende des Infrarotlinsenlochs (1112) her im Infrarotlinsenloch (1112) montiert ist.

14. Schwachlichtnachtsichtvorrichtung nach einem der Ansprüche 1 bis 13, ferner umfassend eine zweite Monokularbaugruppe, wobei die erste Monokularbaugruppe und die zweite Monokularbaugruppe durch eine Verbindungsbrückenbaugruppe (30) miteinander verbunden sind, wobei die erste Monokularbaugruppe ferner ein Brückenschnittstellenelement (15) zum Verbinden mit der Verbindungsbrückenbaugruppe (30) umfasst, wobei das Brückenzwischenelement (15) durch eine Brückenschnittstellendichtung (115) an einer Öffnung an der Oberseite des Objektivtubus (112) montiert ist.

## Revendications

1. Un dispositif de vision nocturne pour faible luminosité, comprenant un premier ensemble monoculaire, le premier ensemble monoculaire comprenant :un boîtier (11) comprenant une plaque de couverture avant (111) et un barillet d'objectif (112), la plaque de couverture avant (111) montée sur une ouverture avant du barillet de l'objectif (112) ;
un groupe d'objectifs pour faible luminosité (12) monté sur la plaque de couverture avant (111) et définissant un axe optique pour faible luminosité ; un support d'intensificateur d'image (16) disposé à l'arrière du groupe d'objectifs pour faible luminosité (12) le long de l'axe optique pour faible luminosité, connecté de manière amovible à la plaque de couverture avant (111), et comprenant un barillet de montage (161) configuré pour permettre le montage d'un intensificateur d'image à cet endroit, un anneau fileté de réglage (162) ayant des extrémités opposées le long de l'axe optique pour faible luminosité, et un élément élastique (164), le barillet de montage (161) étant configuré pour permettre de monter un intensificateur d'image (18) de telle sorte que : une extrémité avant de l'intensificateur d'image (18) est en butée contre la plaque de couverture avant (111), et une extrémité arrière de l'intensificateur d'image (18) est en butée contre une extrémité arrière du barillet de montage (161) au moyen de l'élément élastique (164) ;
un groupe d'oculaires (14) disposé à l'arrière le long de l'axe optique pour faible luminosité ;
dans lequel les extrémités opposées de l'anneau fileté de réglage (162) le long de l'axe optique pour faible luminosité sont reliées respectivement à la plaque de couverture avant (111) et au barillet de montage (161), de sorte que le barillet de montage (161) et la plaque de couverture avant (111) se dirigent l'un vers l'autre ou s'éloignent l'un de l'autre le long de l'axe optique pour faible luminosité lors de la rotation de l'anneau fileté de réglage (162).

2. Le dispositif de vision nocturne pour faible luminosité selon la revendication 1, dans lequel les extrémités opposées de la bague filetée de réglage (162) le long de l'axe optique pour faible luminosité sont respectivement reliées à la plaque de couverture avant (111) et au barillet de montage (161), par des connexions filetées dans des directions hélicoïdales opposées, de sorte que le barillet de montage (161) et la plaque de couverture avant (111) se déplacent l'un vers l'autre ou s'éloignent l'un de l'autre le long de l'axe optique pour faible luminosité lors de la rotation de l'anneau fileté de réglage (162).

3. Le dispositif de vision nocturne pour faible luminosité selon la revendication 1 ou la revendication 2, dans lequel la plaque de couverture avant (111) est configurée pour positionner une extrémité avant de l'intensificateur d'image (18), et une extrémité arrière du barillet de montage (161) à l'écart de la plaque de couverture avant (111) est configurée pour positionner une extrémité arrière de l'intensificateur d'image (18).

4. Le dispositif de vision nocturne pour faible luminosité selon l'une des revendications 1 à 3, dans lequel une interface filetée (1113) est formée à l'arrière de la plaque de couverture avant (111), et une extrémité avant du barillet de montage (161) est dotée d'un filetage de bouche de barillet (1611), les filetages externes du filetage de bouche de barillet (1611) et de l'interface filetée (1113) sont dans des directions hélicoïdales opposées ; une surface de paroi intérieure d'une extrémité de l'anneau fileté de réglage (162) faisant face au barillet de montage (161) est dotée d'un premier filetage interne (1621) fileté avec le filetage de la bouche du barillet (1611), une surface de paroi intérieure d'une extrémité de l'anneau fileté de réglage (162) faisant face à la plaque de couverture avant (111) est dotée d'un deuxième filetage interne (1622) vissé avec l'interface filetée (1113), et le premier filetage interne (1621) et le deuxième filetage interne (1622) sont dans des directions hélicoïdales opposées.

5. Le dispositif de vision nocturne pour faible luminosité selon l'une des revendications 1 à 4, dans lequel une pluralité d'ouvertures pour l'observation d'une position de montage est définie via une paroi annulaire de la bague filetée de réglage (162) autour de l'axe optique pour faible luminosité.

6. Le dispositif de vision nocturne pour faible luminosité selon la revendication 4, dans lequel la plaque de couverture avant (111) est dotée d'un trou pour lentille pour faible luminosité (1111) pour monter le groupe d'objectifs pour faible luminosité (12), l'interface filetée (1113) est formée à l'extrémité arrière du trou de lentille pour faible luminosité (1111) autour d'un axe central de l'ouverture pour faible luminosité (1111), l'interface filetée (1113) s'étend autour du trou de lentille pour faible luminosité (1111) vers l'arrière le long de l'axe optique pour faible luminosité, et l'avant de l'intensificateur d'image (18) est en butée contre une surface d'extrémité de l'interface filetée (1113).

7. Le dispositif de vision nocturne pour faible luminosité selon la revendication 6, dans lequel une paroi latérale de l'interface filetée (1113) est dotée d'une encoche de positionnement (1114) qui s'ouvre vers l'arrière, une patte (1613) dépasse de l'avant du barillet de montage (161), et la patte (1613) est engagée dans l'encoche de positionnement (1114) le long de la direction de l'axe optique pour faible luminosité pour limiter la liberté de rotation du barillet de montage (161) autour de l'axe optique pour faible luminosité.

8. Le dispositif de vision nocturne pour faible luminosité selon l'une des revendications 1 à 7, dans lequel le barillet de montage (161) est de forme cylindrique et est doté de découpes (1612).

9. Le dispositif de vision nocturne pour faible luminosité selon la revendication, 8, dans lequel un poteau de montage (1614) est installé sur une surface murale extérieure du barillet de montage (161), pour monter une carte de commande principale (101).

10. Le dispositif de vision nocturne pour faible luminosité selon la revendication 9, dans lequel la carte de commande principale (101) intègre un circuit d'alimentation pour alimenter l'intensificateur d'image (18), une languette à ressort (102) est montée de manière amovible sur la carte de commande principale (101) au moyen d'une vis conductrice, et la languette à ressort (102) s'étend dans l'intérieur du barillet de montage (161) via la découpe (1612) pour être en contact avec un contact de l'intensificateur d'image (18).

11. Le dispositif de vision nocturne pour faible luminosité selon l'une des revendications 1 à 10, dans lequel le premier ensemble monoculaire comprend en outre un groupe de lentilles infrarouges (13) et un combineur d'images (163), le dispositif de vision nocturne pour faible luminosité comprend en outre un ensemble d'affichage (17), le groupe de lentilles infrarouges (13) est monté sur la plaque de couverture avant (111) et définit un axe optique infrarouge parallèle à l'axe optique pour faible luminosité, le combineur d'image (163) est disposé entre l'intensificateur d'image (18) et le groupe d'oculaires (14) le long de l'axe optique pour faible luminosité, l'ensemble d'affichage (17) est disposé d'un côté du combineur d'images (163) et relié au groupe de lentilles infrarouges (13) pour afficher une image thermique de la lumière infrarouge détectée ; le combineur d'images (163) est fixement relié à l'arrière du barillet de montage (161) pour former un support en une seule pièce avec le barillet de montage (161).

12. Le dispositif de vision nocturne pour faible luminosité selon la revendication 11, dans lequel le combineur d'image (163) comprend une lentille optique (1631) et un cadre métallique (1632) entourant la lentille optique (1631) ; l'ensemble d'affichage (17) est fixé directement au combineur d'image (163) pour former une unité en une seule pièce, ou le cadre métallique (1632) est équipé d'un support d'écran pour fixer l'ensemble d'affichage (17), l'ensemble d'affichage (17) étant monté sur le support d'écran au moyen d'une entretoise de réglage.

13. Le dispositif de vision nocturne pour faible luminosité selon la revendication 11, dans lequel la plaque de couverture avant (111) a la forme d'une plaque plate et est dotée d'un trou pour la lentille infrarouge (1112) pour le montage du groupe de lentilles infrarouges (13), le groupe de lentilles infrarouges (13) comprend une lentille d'objectif infrarouge (131) disposée le long de l'axe optique infrarouge, une bride d'objectif infrarouge (132), un anneau d'étanchéité de bride (133) et un détecteur infrarouge (134). la lentille d'objectif infrarouge (131) est fixée dans la bride de la lentille infrarouge (132), la bride de la lentille d'objectif infrarouge (132) est montée via la bague d'étanchéité de la bride (133) dans le trou de la lentille infrarouge (1112) de la plaque de couverture avant (111) depuis l'extrémité avant du trou de la lentille infrarouge (1112), et le détecteur infrarouge (134) est monté sur le trou de la lentille infrarouge (1112) depuis l'extrémité arrière de l'ouverture infrarouge (1112).

14. Le dispositif de vision nocturne pour faible luminosité selon l'une des revendications 1 à 13, comprenant en outre un deuxième ensemble monoculaire, le premier ensemble monoculaire et le deuxième ensemble monoculaire étant interconnectés par un ensemble pont de connexion (30), le premier ensemble monoculaire comprend en outre un élément d'interface du pont (15) pour le raccordement à l'ensemble pont de connexion (30), l'élément d'interface du pont (15) étant monté à une ouverture au sommet du barillet de l'objectif (112) par un joint d'interface de pont (115).
